(19) Europäisches Patentamt
European Patent Office
Office européen des brevets

(11) EP 1 698 884 A1

(12) EUROPEAN PATENT APPLICATION

(43) Date of publication:
06.09.2006 Bulletin 2006/36

(51) Int Cl.:
G01N 21/57 (2006.01)    B41J 11/00 (2006.01)

(21) Application number: 06110641.5

(22) Date of filing: 03.03.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 05.03.2005  KR 18436

(71) Applicant: Samsung Electronics Co., Ltd
Suwon-si, Gyeonggi-do 442-742 (KR)

(72) Inventor: Hwang, Ho-bin
Suwon-si, Gyeonggi-do (KR)

(74) Representative: Read, Matthew Charles et al
Venner Shipley LLP
20 Little Britain
London EC1A 7DH (GB)

(54) **Apparatus and method for identifying the characteristics of a print medium**

(57) A device and method for identifying an image forming print medium (130) are provided. The device includes a first light emitting unit (110) which irradiates light onto the image forming print medium (130) at a first incident angle, a second light emitting unit (120) which irradiates light onto the image forming print medium (130) at a second incident angle, a light receiving unit (140) which receives light which is irradiated from the first light emitting unit (110) and the second light emitting unit (120) and reflected by the image forming print medium (130), an image forming print medium identifying unit which identifies the kind of the image forming print medium by using the variances of first received light amounts and second received light amounts which have varied over time, a light emission controlling unit which controls the light emissions of the first light emitting unit (110) and the second light emitting unit (120).

# FIG. 2

EP 1 698 884 A1

**Description**

The present invention relates to an image forming apparatus. More particularly, the present invention relates to an apparatus and a method for determining the properties of a print medium in an image forming apparatus by using a light receiving element and a plurality of light emitting elements.

An image forming apparatus such as a printer or a multifunctional device prints on general printing paper. However, in some cases, various transparent or glossy print media may be used, such as Overhead Projector (OHP) film and coated paper. Particularly, as digital cameras and camcorders have become popular, users want to directly print an image, and thus photographic paper is used as a print medium in the image forming apparatus. Thus, the image forming apparatus must establish an adequate printing condition according to the properties of the print medium, in order to provide desired resolution and image quality. A conventional image forming apparatus for determining the properties of various print media comprises a light emitting element for irradiating light onto the print medium at a predetermined angle of incidence, a first light receiving element which is installed at the same but opposite angle for measuring a degree of specular reflection from the print medium, and a second light receiving element which is installed at right angles to the surface of the print medium for measuring the degree of diffusive reflection of the print medium. The conventional image forming apparatus identifies the kind of print medium by the degree of specular reflection by using the first light receiving element and the degree of diffusive reflection by using the second light receiving element.

Light emitting elements, such as a light emitting diodes (LED), are relatively inexpensive. However, light receiving elements, which receive light reflected by the print medium and convert the light into an electrical signal, are relatively expensive. Therefore the cost of manufacturing the image forming apparatus is undesirably high.

Moreover, the conventional method of comparing the intensity of received light does not differentiate between normal paper and inkjet paper. Thus the type of print medium cannot always be accurately determined.

An object of the present invention is to provide a device and a method to accurately determine the characteristics of a print medium in an image forming apparatus.

According to the invention, there is provided an apparatus for determining the characteristics of a print medium comprising: light emitting means for emitting light towards a print medium; a light receiving unit for detecting light from the light emitting means reflected by the print medium; and identifying means for identifying the type of the print medium in dependence on the intensity of the detected light characterised in that the light emitting means comprises a first and a second light emitting unit operable to emit light that is incident on the print medium at a first and a second angle respectively; and the identifying means is configured to calculate the variance with respect to frequency in the intensity of detected light and determine the type of the print medium in dependence on the calculated variance.

According to the invention, there is also provided a device for identifying an image forming print medium is provided. The device comprises a first light emitting unit for irradiating light onto the image forming print medium at a first incident angle, a second light emitting unit for irradiating light onto the image forming print medium at a second incident angle, a light receiving unit for receiving the light irradiated from the first light emitting unit and the second light emitting unit and reflected from the image forming print medium, an image forming print medium identifying unit for identifying the kind of the image forming print medium by using the variances of first received light amounts and second received light amounts which have varied over time and are received in the light receiving unit, and a light emission controlling unit for controlling the light emission of the first light emitting unit and the second light emitting unit.

Yet further, according to the invention, there is also provided a method of identifying an image forming print medium is provided. The method comprises irradiating light onto the image forming print medium at a first incident angle and a second incident angle and receiving the light reflected from the image forming print medium, and identifying the kind of image forming print medium by using the variances of the first light receiving amounts and the second light receiving amounts.

Additionally, there is provided an apparatus for determining the characteristics of a print medium comprising: light emitting means for emitting light towards a print medium; a light receiving unit for detecting light from the light emitting means reflected by the print medium; and identifying means for identifying the type of the print medium in dependence on the intensity of the detected light characterised in that the light emitting means comprises a first and a second light emitting unit operable to emit light that is incident on the print medium at a first and a second angle respectively.

Furthermore, there is provided an apparatus for determining the characteristics of a print medium comprising: light emitting means for emitting light towards a print medium; a light receiving unit for detecting light from the light emitting means reflected by the print medium; and identifying means for identifying the type of the print medium in dependence on the intensity of the detected light characterised in that the identifying means is configured to calculate the variance with respect to frequency in the intensity of the detected light and identify the type of the print medium based on the calculated variance.

Additional preferred and optional features are defined in the dependent claims appended hereto.

Embodiments of the invention will now be described by way of example, with reference to the accompanying drawings, in which:

Figure 1 is a block diagram of an apparatus for identifying the characteristics of print medium according to an exemplary embodiment of the present invention;

Figure 2 is a diagram illustrating the arrangement of the apparatus of Figure 1 with respect to the surface of the print medium according to an exemplary embodiment of the present invention;

Figure 3 is a schematic diagram illustrating the intensity of the received light for print media of different types;

Figure 4 is a block diagram 150 illustrating the print medium identifying unit shown in Figure 1 according to an exemplary embodiment of the present invention;

Figure 5 shows the different properties of various kinds of print media identified by the first identifying unit shown in Figure 4 according to an exemplary embodiment of the present invention;

Figure 6 illustrates the different properties of different kinds of image forming print medium identified by a second identifying unit shown in Figure 4 according to an exemplary embodiment of the present invention;

Figure 7 is a flowchart of a method of identifying a print medium according to an exemplary embodiment of the present invention;

Figure 8 is a flowchart illustrating step 300 of Figure 7 according to an exemplary embodiment of the present invention;

Figure 9 is a flowchart illustrating step 300 of Figure 7 according to another exemplary embodiment of the present invention;

Figure 10 is a flowchart illustrating step 300 of Figure 7 according to yet another exemplary embodiment of the present invention;

Figure 11 is a flowchart illustrating step 300 of Figure 7 according to yet another exemplary embodiment of the present invention; and

Figure 12 is a flowchart illustrating step 302 of Figure 7 according to an exemplary embodiment of the present invention.

Throughout the drawings, like reference numerals will be understood to refer to like parts, components and structures.

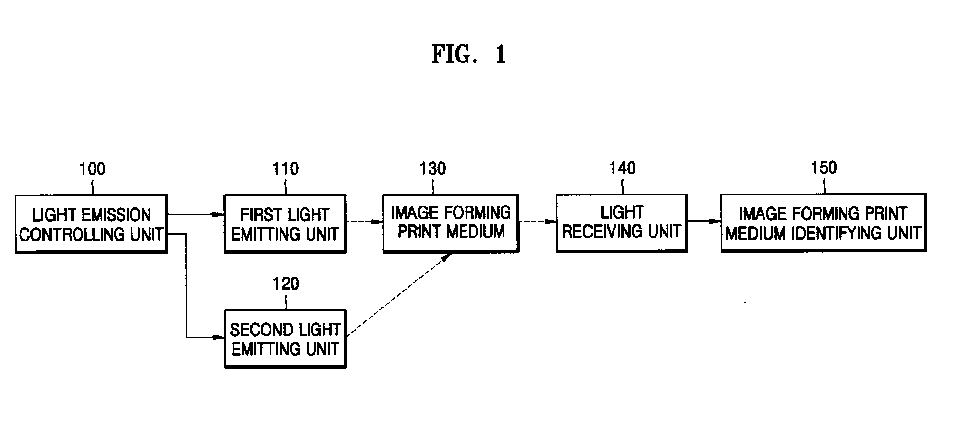

Referring to Figure 1, an apparatus for determining the properties of different kinds of print media comprises a light emission controlling unit 100, a first light emitting unit 110, a second light emitting unit 120, a light receiving unit 140, and a print medium identifying unit 150. Light from the first and the second light emitting units 110, 120 is incident on a print medium 130 and the light receiving unit 140 receives light reflected by the print medium 130. The light emission controlling unit 100 transmits control signals for controlling light emission to the first light emitting unit 110 and the second light emitting unit 120.

When the apparatus of Figure 1 is mounted in a fixed position in an image forming apparatus and the print medium 130 passes through the device, the light emission controlling unit 100 controls the first and the second light emitting units 110, 120 to emit light sequentially. That is, the light emission controlling unit 100 controls the first light emitting unit 110 to emit light for a first predetermined time, terminates the light emission from the first light emitting unit 110, and then controls the second light emitting unit 120 to emit light for a second predetermined time. Alternatively or additionally, the light emission controlling unit 100 can control the second light emitting unit 120 to emit light for a first predetermined time, terminate the light emission from the second light emitting unit 120, and then control the first light emitting unit 120 to emit light for a second predetermined time.

When the apparatus of Figure 1 instead is installed in a moving carriage (not shown) of the image forming apparatus and moves together with the carriage, the light emission controlling unit 100 controls the first light emitting unit 110 and the second light emitting unit 120 to emit light during different phases of the reciprocating motion of the carriage. That is, the light emission controlling unit 100 controls the first light emitting unit 110 to emit light while the carriage moves in a main scan direction, and then the second light emitting unit 120 to emit light while the carriage returns to its original location. Alternatively, the light emission controlling unit 100 may control the second light emitting unit 120 to emit light while the carriage moves in the main scan direction, and then the first light emitting unit 110 to emit light while the carriage returns to its original location.

Light from the first light emitting unit 110 is incident on the print medium 130 at a first incident angle in the range of about 60 degrees to 90 degrees. Light from the second light emitting unit 120 is incident on the print medium 130 at a second incident angle in the range of about 30 degrees to 60 degrees. Both the first and the second light emitting units 110, 120 comprise light emitting diodes as the light emitting elements.

The light receiving unit 140 receives the light irradiated from the first light emitting unit 110 and the second light emitting unit 120 and reflected by the print medium 130, and transmits the received reflected light to the print medium identifying unit 150. The light receiving unit 140 uses a photodiode as a light receiving element.

The light receiving unit 140 is located at an angle that allows it to receive light irradiated at the first incident angle and specularly reflected by the image forming print medium 130.

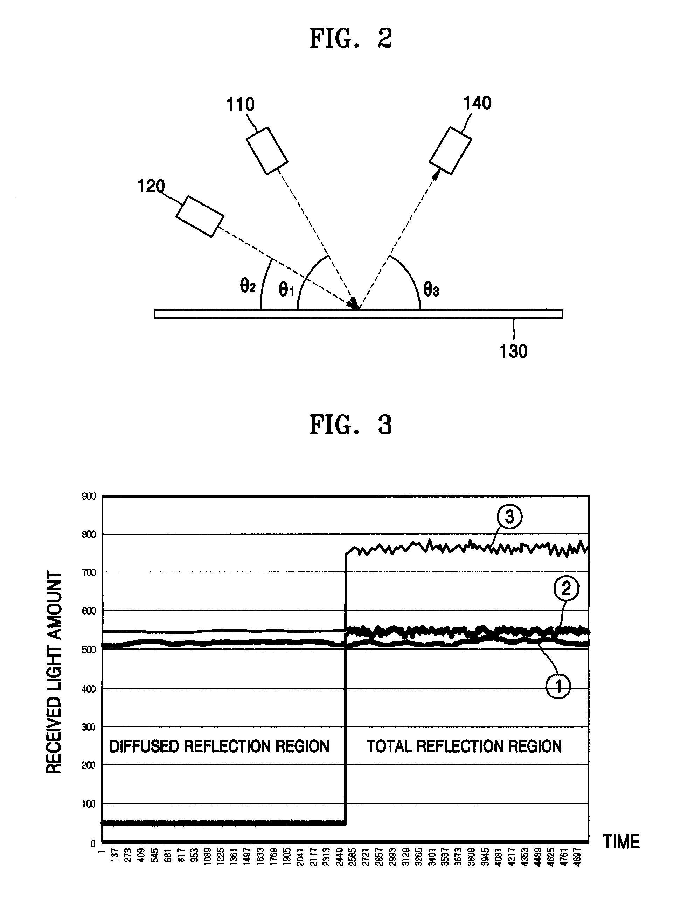

Figure 2 is a diagram showing the angles between the surface of the image forming print medium 130 and the first light emitting unit 110, the second light emitting element 120, and the light receiving element 140 in Figure 1 according to an exemplary embodiment of the present invention.

Referring to Figure 2, the first light emitting unit 110 forms a first incident angle θ1 with respect to the image forming print medium 130, the second light emitting unit 120 forms a second incident angle θ2 with respect to the image forming print medium 130, and the light receiving unit 140 forms an angle θ3 with respect to the image forming print medium 130.

In this case, the angle θ1 is substantially equal to the angle θ3. Consequently, the light receiving unit 140 receives light from the first light emitting unit 110 which has been specularly reflected by the imaging forming print medium 130.

Since the angle between the light receiving unit 140 and the image forming print medium 130 differs from the angle between the second light emitting unit 120 and the image forming print medium 130, the light receiving unit 140 receives light which is irradiated from the second light emitting unit 120 and diffusely reflected by the image forming print medium 130.

Figure 3 is a schematic diagram showing the intensity of the light received by the light receiving unit 140 against time according to an exemplary embodiment of the present invention.

In Figure 3, line (1) shows the intensity of specularly reflected light followed by the intensity of diffusively reflected light when the print medium 130 is normal paper, such as non-thermal or non-glossy paper, or inkjet paper. The intensity of light reflected by the normal paper or the inkjet paper and received by the light receiving unit 140 are almost the same irrespective of whether the received light has been specularly or diffusively reflected by the print medium.

In Figure 3, line (2) shows the intensity of specularly reflected light and diffusively reflected light for a transparent paper print medium. The intensity of specularly reflected light is different from the intensity of the diffusively reflected light.

In Figure 3, line (3) shows the intensity of specularly and diffusively reflected light for a photo paper. The intensities of the specularly and the diffusively light differ greatly. The specular reflection of the photo paper is relatively high, whereas the diffused reflection is relatively low.

The print medium identifying unit 150 determines the type of the print medium 130 by calculating the average and the variances of the intensity of the specularly reflected light and the diffusively reflected light.

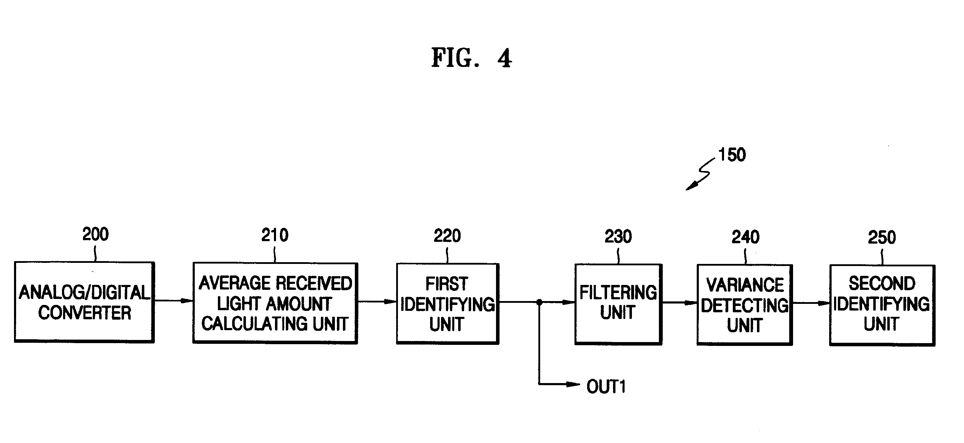

Referring to Figure 4, the image forming print medium identifying unit 150 comprises an analog/digital converter 200, an average light received amount calculating unit 210, a first identifying unit 220, a filtering unit 230, a variance detecting unit 240, and a second identifying unit 250.

The analog/digital converter 200 converts the intensity of the specularly reflected light and the diffusively reflected light into digital signals and transmits the converted results to the average received light amount calculating unit 210.

The average received light amount calculating unit 210 averages the intensity of the specularly reflected light and transmits the result, the first average, to the first identifying unit 220. The average received light amount calculating unit 210 also averages the intensity of the diffusively reflected light and transmits the result, the second average, to the first identifying unit 220. The average received light amount calculating unit 210 calculates the average of the received light intensities over a predetermined time using digital information on the received light intensities during the predetermined time.

The first identifying unit 220 determines the type of the print medium 130 using the ratio of the average specularly reflected light and the average diffusively reflected light, i.e. the ratio of the first average and the second average. The ratio of the first average and the second average can be obtained using Equation 1.

Equation 1

$$\text{Ratio between averages} = (\text{first average/second average}) \times 1000$$

Here, "1000" is a constant which makes the ratio of the first average to the second average larger. The constant can be varied.

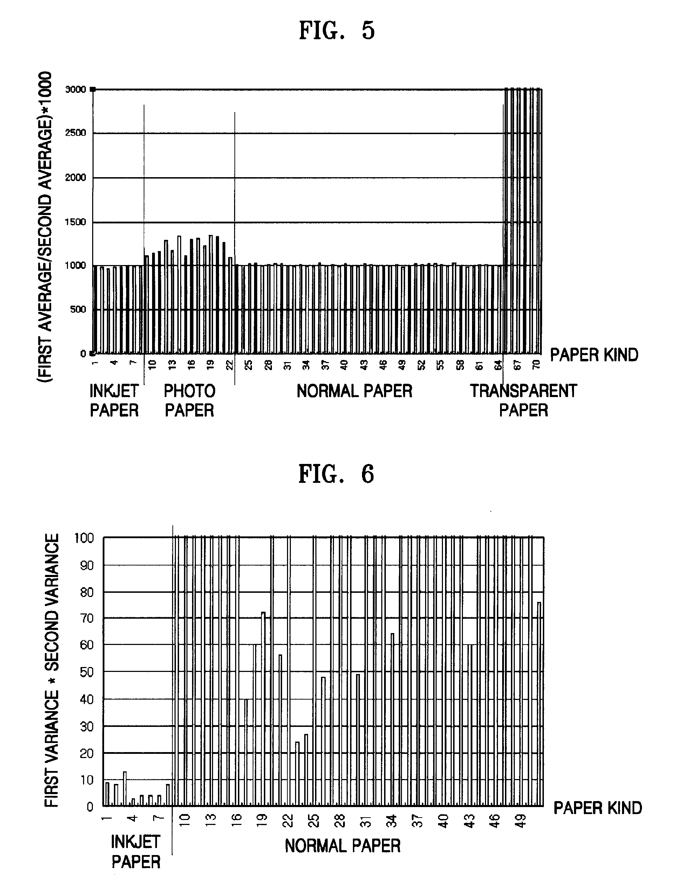

Figure 5 is a diagram illustrating various kinds of image forming print media identified in the first identifying unit 220 shown in Figure 4 according to an exemplary embodiment of the present invention.

The ratio of the first average to the second average of each of the image forming print media calculated by using Equation 1 is shown in Figure 5. Since normal paper/inkjet paper, transparent paper, and photo paper have different ratios, the type of print media can be identified. However, since inkjet paper and normal paper have similar ratios, they cannot be discriminated using this method. However, they can be discriminated from one another using the filtering unit 230, the variance detecting unit 240, and the second identifying unit 250.

When the identified print medium 130 is photo paper or transparent paper, the first identifying unit 220 transmits the identified result to an output terminal OUT1. However, when the identified image forming print medium 130 is normal paper or inkjet paper, the first identifying unit 220 transmits the identified result to the filtering unit 230.

The filtering unit 230 filters the specularly reflected light and the diffusively reflected light with a frequency in a predetermined frequency range, in response to result of the first identifying unit 220, and transmits the filtered results to the variance calculating unit 240.

The fluctuation of frequency components in a predetermined frequency range is smaller in inkjet paper than in normal paper. This is because a coated image forming print medium, such as inkjet paper, undergoes a relatively small surface characteristic variation due to the coating.

Information about the range of frequencies for which the difference between inkjet paper and normal paper can be detected is stored in the filtering unit 230.

The filtering unit 230 band-pass filters a number of narrower frequency ranges out of the predetermined frequency range to calculate the intensity of the received light in each of the narrower frequency ranges in the predetermined frequency range. The variance detecting unit 240 detects a first variance with respect to frequency of the specularly reflected light and a second variance with respect to frequency of the diffusively reflected light.

The variance is a value that represents the difference between the received light intensities and the average. The variance detecting unit 240 calculates the first variance for the filtered specularly received light and the second variance for the filtered diffusively received light and outputs the calculation results to the second identifying unit 250.

The second identifying unit 250 identifies the print medium 130 by analysing the first variance and the second variance. For example, the second identifying unit 250 multiplies the first variance by the second variance and determines that the image forming print medium 130 is normal paper when the multiplied result is relatively large, and the image forming print medium 130 is inkjet paper when the multiplied result is relatively small. Although the image forming print medium 130 is described to be identified by multiplying the first variance by the second variance, this is only an example. The first variance and the second variance may be used as separate values for identifying the image forming print medium 130.

Figure 6 is a diagram illustrating the kind of image forming print medium 130 identified by the second identifying unit 250 shown in Figure 4 according to an exemplary embodiment of the present invention. The reason why the product of the first variance and the second variance of the inkjet paper is relatively small is because the fluctuation of the frequency in the predetermined frequency range is relatively small for the inkjet paper and thus the first variance and the second variance are relatively small. On the other hand, the reason why the product of the first variance and the second variance of the normal paper is relatively large is because the fluctuation of the frequency in the predetermined frequency range is relatively large for the normal paper and thus the first variance and the second variance are relatively large.

A method for identifying the image forming print medium according to the present invention will now be described.

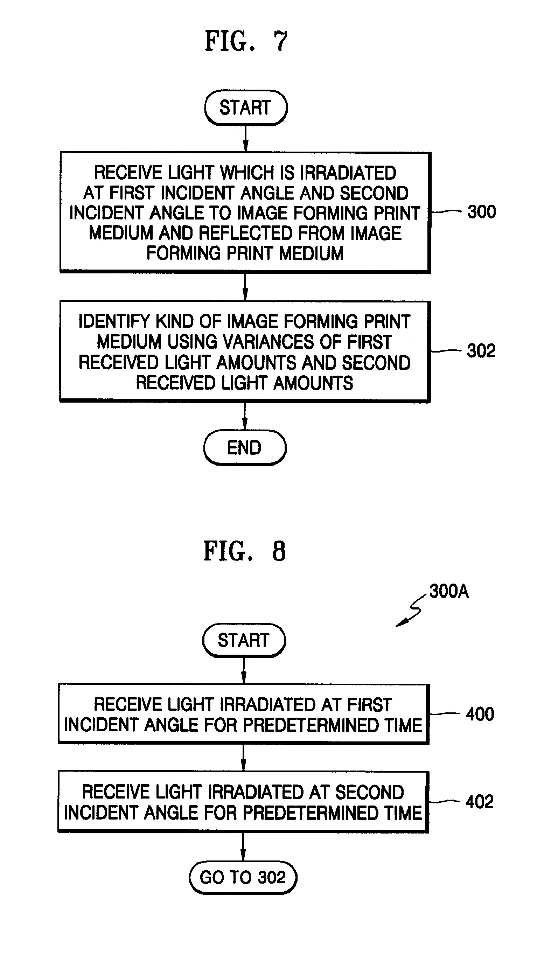

Referring to Figure 7, at step 300, light is irradiated onto the image forming print medium at a first incident angle and a second incident angle, and the light reflected by the image forming print medium is detected. The first incident angle is in the range of 60 degrees to 90 degrees. The second incident angle is in the range of 30 degrees to 60 degrees. At step 302, the type of the print medium is identified using the variances with respect to frequency of the detected light incident at the print medium at the first incident angle and at the second incident angle respectively.

Figure 8 is a flowchart illustrating an exemplary embodiment 300A of step 300 shown in Figure 7 according to an exemplary embodiment of the present invention. This embodiment is suitable when the device for identifying an image forming print medium is fixed in the image forming apparatus.

First, the light irradiated at the first incident angle is received for a predetermined time at step 400. When the light irradiated from the first light emitting unit 110 is reflected by the image forming print medium 130, the light receiving unit 140 receives the reflected light.

Thereafter, the light irradiated at the second incident angle is received for a predetermined time at step 402. When the light irradiated from the second light emitting unit 120 is reflected by the image forming print medium 130, the light receiving unit 140 receives the reflected light.

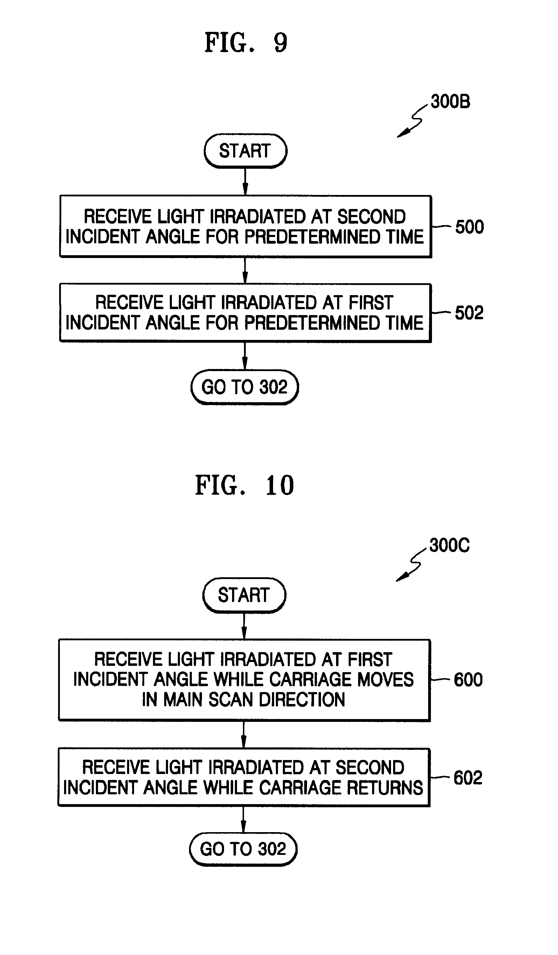

Figure 9 is a flowchart illustrating an exemplary embodiment 300B of step 300 shown in Figure 7 according to an exemplary embodiment of the present invention. This embodiment is also suitable when the device for identifying an image forming print medium is fixed in the image forming apparatus.

First, the light irradiated at the second incident angle is received for a predetermined time at step 500. When the light irradiated from the second light emitting unit 120 is reflected by the image forming print medium 130, the light receiving unit 140 receives the reflected light.

Thereafter, the light irradiated at the first incident angle is received for a predetermined time at step 502. When the light irradiated from the first light emitting unit 110 is reflected by the image forming print medium 130, the light receiving unit 140 receives the reflected light.

Figure 10 is a flowchart illustrating an exemplary embodiment 300C of step 300 shown in Figure 7 according to an exemplary embodiment of the present invention. This embodiment is suitable when the device for identifying the image forming print medium is installed in a carriage (not shown) of the image forming apparatus and moves together with the carriage.

First, the light irradiated at the first incident angle is received while the carriage of the image forming apparatus moves in a main scan direction at step 600. When the light irradiated from the first light emitting unit 110 is reflected by the image forming print medium 130, the light receiving unit 140 receives the reflected light while the carriage of the image forming apparatus moves in the main scan direction.

Thereafter, the light irradiated at the second incident angle is received while the carriage returns at step 602. When the light irradiated from the second light emitting unit 120 is reflected by the image forming print medium 130, the light receiving unit 140 receives the reflected light while the carriage of the image forming apparatus returns to its original location.

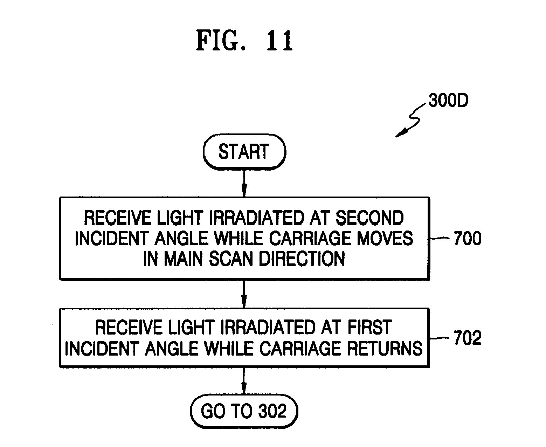

Figure 11 is a flowchart illustrating an exemplary embodiment 300D of step 300 shown in Figure 7 according to an exemplary embodiment of the present invention. This embodiment is also suitable when the device for identifying the image forming print medium is installed in the carriage (not shown) of the image forming apparatus and moves together with the carriage.

First, the light irradiated at the second incident angle is received while the carriage of the image forming apparatus moves in the main scan direction at step 700. When the light irradiated from the second light emitting unit 120 is reflected by the image forming print medium 130, the light receiving unit 140 receives the reflected light while the carriage of the image forming apparatus moves in the main scan direction.

Thereafter, the light irradiated at the first incident angle is received while the carriage returns at step 702. When the light irradiated from the first light emitting unit 110 is reflected by the image forming print medium 130, the light receiving unit 140 receives the reflected light while the carriage of the image forming apparatus returns to its original location.

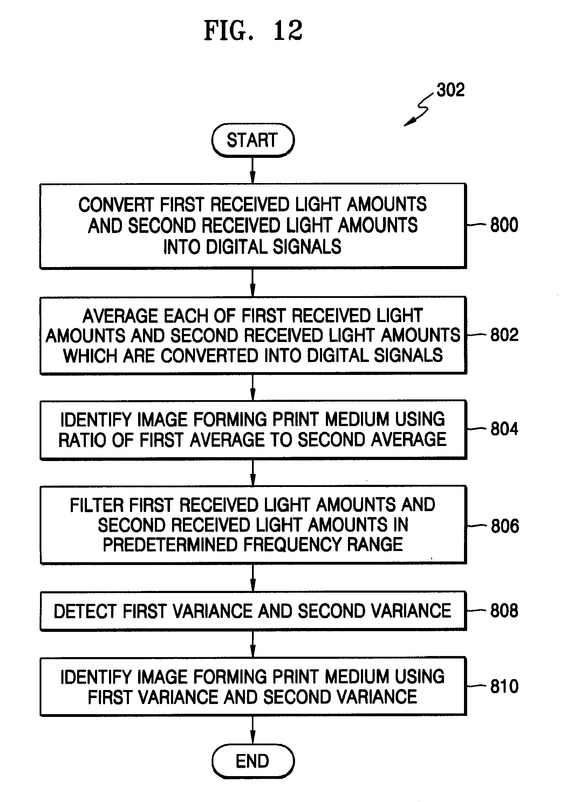

Figure 12 is a flowchart illustrating step 302 shown in Figure 7 according to an exemplary embodiment of the present invention.

First, the detected intensity of the specularly reflected light and the detected intensity of the diffusively reflected light, which varies over time, are converted into digital signals at step 800.

Next, a first average intensity corresponding to the average intensity of the specularly reflected light and a second average intensity corresponding to the average intensity of the diffusively reflected light are obtained by averaging the digital signals at step 802.

Subsequently, the print medium is identified by using the ratio of the first average to the second average at step 804.

Referring to Figure 5, since inkjet paper/normal paper, transparent paper, and photo paper have different ratios between the averages, the image forming print media can be identified. However, since inkjet paper and normal paper have similar ratios between the averages and cannot be discriminated from one another, operations 806 through 810 are performed to identify them.

The detected specularly reflected light and the detected diffusively reflected light are filtered in a predetermined frequency range at step 806.

A frequency range in which a difference in received light amount between inkjet paper and normal paper can be recognized is previously detected as the predetermined frequency range, and narrow frequency ranges out of the predetermined frequency range are band-pass filtered to calculate the detected light in each narrow frequency range.

Next, a first variance corresponding to the variance of the filtered specularly reflected light and a second variance corresponding to the variance of the filtered diffusively reflected light are calculated at step 808.

Subsequently, the image forming print medium is identified by using the first variance and the second variance at step 810. Since the product of the first variance and the second variance of inkjet paper is relatively small and the product of the first variance and the second variance of normal paper is relatively large, the kind of image forming print medium can be identified by using the first variance and the second variance.

As mentioned above, the device and method for identifying the image forming print medium according to the present invention can accurately identify the kind of image forming print medium used in the image forming apparatus and thus the image forming quality can be improved.

Particularly, since the kind of image forming print medium can be identified by using two light emitting elements and one light receiving element, the cost of the device for identifying the image forming print medium can be reduced.

Further, by filtering the results detected by the light receiving element, the inkjet paper and the normal paper can be accurately identified.

While the present invention has been particularly shown and described with reference to exemplary embodiments thereof, it will be understood by those of ordinary skill in the art that various changes in form and detail may be made therein without departing from the spirit and scope of the present invention as defined by the following claims.

**Claims**

1. Apparatus for determining the characteristics of a print medium (130) comprising:

   light emitting means (110, 120) for emitting light towards a print medium (130);
   a light receiving unit (140) for detecting light from the light emitting means reflected by the print medium; and
   identifying means (150) for identifying the type of the print medium in dependence on the intensity of the detected light **characterised in that**
   the light emitting means (110, 120) comprises a first and a second light emitting unit operable to emit light that is incident on the print medium at a first and a second angle respectively; and
   the identifying means (150) is configured to calculate the variance with respect to frequency in the intensity of detected light and determine the type of the print medium in dependence on the calculated variance.

2. Apparatus according to claim 1, wherein the first light emitting unit (110), the second light emitting unit (120) and the light receiving unit (140) are positioned such that the detected light from the first light emitting unit is specularly reflected by the print medium and the detected light from the second light emitting unit is diffusively reflected by the print medium.

3. Apparatus according to claim 2, wherein the identifying unit (150) is further operable to calculate a first variance for the detected specularly reflected light and a second variance for the detected diffusively reflected light.

4. A device for identifying an image forming print medium, comprising:

   a first light emitting unit for irradiating light onto the image forming print medium at a first incident angle;
   a second light emitting unit for irradiating light onto the image forming print medium at a second incident angle;
   a light receiving unit for receiving light which is irradiated from the first light emitting unit and the second light emitting unit and reflected from the image forming print medium;
   an image forming print medium identifying unit for identifying the kind of the image forming print medium by using the variances of first received light amounts and second received light amounts which have varied over time; and
   a light emission controlling unit for controlling the light emission of the first light emitting unit and the second light emitting unit.

5. The device according to claim 4, wherein the first incident angle is the angle between the first light emitting unit and the image forming print medium and is in the range of about 60 degrees to 90 degrees.

6. The device according to claim 4, wherein the second incident angle is the angle between the second light emitting unit and the image forming print medium and is in the range of about 30 degrees to 60 degrees.

7. The device according to claim 4, wherein the light receiving unit is located at an angle at which the light irradiated at the first incident angle is totally reflected by the image forming print medium.

8. The device according to claim 4, wherein the image forming print medium identifying unit comprises:

   an analog/digital converter for converting the first received light amounts and the second received light amounts which are changed over time into digital signals;
   an average received light amount calculating unit for averaging the first received light amounts which are converted into the digital signals in the analog/digital converter and which averages the second received light amounts which are converted into the digital signals in the analog/digital converter;
   a first identifying unit for identifying the image forming print medium by using the ratio of a first average of the first received light amounts to a second average of the second received light amounts;
   a filtering unit for filtering the first received light amounts and the second received light amounts which have varied over time in a predetermined frequency range in response to the identified results of the first identifying unit;
   a variance detecting unit for detecting a first variance of the filtered first received light amounts and a second variance of the filtered second received light amounts; and
   a second identifying unit for identifying the image forming print medium by using the first variance and the second variance.

9. The device according to claim 8, wherein the filtering unit performs filtering by using a frequency range in which a difference in received light amount between inkjet paper and normal paper can be recognized as the predetermined frequency range.

10. The device according to claim 4, wherein, when the device for identifying the image forming print medium is fixed in an image forming apparatus and the image forming print medium passes through the device for identifying the image forming print medium, the light emission controlling unit controls the first light emitting unit and the second light emitting unit to emit light for a predetermined time.

11. The device according to claim 4, wherein, when the device for identifying the image forming print medium is installed in a carriage, the light emission controlling unit controls the first light emitting unit and the second light emitting unit to emit light while the carriage reciprocates.

12. A method of identifying an image forming print medium, comprising:

(a) irradiating light onto the image forming print medium at a first incident angle and a second incident angle and receiving the light reflected from the image forming print medium; and
(b) identifying the kind of the image forming print medium by using the variances of first light receiving amounts and second light receiving amounts.

13. The method according to claim 12, wherein the first incident angle is in the range of about 60 degrees to 90 degrees.

14. The method according to claim 12, wherein the second incident angle is in the range of about 30 degrees to 60 degrees.

15. The method according to claim 12, wherein (a) irradiating step comprises receiving the light irradiated at the first incident angle at an angle at which total reflector occurs in the image forming print medium.

16. The method according to claim 12, wherein (a) irradiating step comprises:

(a1) receiving the light irradiated at the first incident angle for a predetermined time; and
(a2) receiving the light irradiated at the second incident angle for the predetermined time.

17. The method according to claim 12, wherein (a) irradiating step comprises:

(a1) receiving the light irradiated at the second incident angle for a predetermined time; and
(a2) receiving the light irradiated at the first incident angle for the predetermined time.

18. The method according to claim 12, wherein (a) irradiating step comprises:

(a1) receiving the light irradiated at the first incident angle while a carriage of an image forming apparatus moves in a main scan direction; and
(a2) receiving the light irradiated at the second incident angle while the carriage returns.

19. The method according to claim 12, wherein (a) irradiating step comprises:

(a1) receiving the light irradiated at the second incident angle while a carriage of an image forming apparatus moves in a main scan direction; and
(a2) receiving the light irradiated at the first incident angle for while the carriage returns.

20. The method according to claim 12, wherein (b) identifying step comprises:

(b1) converting the first light emitting amounts and the second light emitting amounts which have varied over time into digital signals;
(b2) averaging the first received light amounts which have varied into the digital signals and averaging the second received light amounts which have varied into the digital signals;
(b3) identifying the image forming print medium by using the ratio of a first average of the first received light amounts to a second average of the second received light amounts;

(b4) filtering the first received light amounts and the second received light amounts which have varied over time in a predetermined frequency range;

(b5) detecting a first variance of the filtered first received light amounts and a second variance of the filtered second received light amounts; and

(b6) identifying the image forming print medium by using the first variance and the second variance.

**21.** The method according to claim 17, wherein (b4) filtering step comprises performing filtering by using a frequency range in which a difference in received light amount between inkjet paper and normal paper can be recognized as the predetermined frequency range.

**22.** Apparatus for determining the characteristics of a print medium comprising:

light emitting means (110, 120) for emitting light towards a print medium (130);
a light receiving unit (140) for detecting light from the light emitting means reflected by the print medium; and
identifying means (150) for identifying the type of the print medium in dependence on the intensity of the detected light **characterised in that**
the light emitting means (110, 120) comprises a first and a second light emitting unit operable to emit light that is incident on the print medium at a first and a second angle respectively.

**23.** Apparatus for determining the characteristics of a print medium comprising:

light emitting means (110, 120) for emitting light towards a print medium (130);
a light receiving unit (140) for detecting light from the light emitting means reflected by the print medium; and
identifying means (150) for identifying the type of the print medium in dependence on the intensity of the detected light **characterised in that**
the identifying means (150) is configured to calculate the variance with respect to frequency in the intensity of the detected light and identify the type of the print medium based on the calculated variance.

## FIG. 1

| LIGHT EMISSION CONTROLLING UNIT (100) | FIRST LIGHT EMITTING UNIT (110) | IMAGE FORMING PRINT MEDIUM (130) | LIGHT RECEIVING UNIT (140) | IMAGE FORMING PRINT MEDIUM IDENTIFYING UNIT (150) |

SECOND LIGHT EMITTING UNIT (120)

EP 1 698 884 A1

# FIG. 2

# FIG. 3

# FIG. 4

200 ANALOG/DIGITAL CONVERTER → 210 AVERAGE RECEIVED LIGHT AMOUNT CALCULATING UNIT → 220 FIRST IDENTIFYING UNIT → OUT1 / 230 FILTERING UNIT → 240 VARIANCE DETECTING UNIT → 250 SECOND IDENTIFYING UNIT

150

EP 1 698 884 A1

## FIG. 5

## FIG. 6

# FIG. 7

START

RECEIVE LIGHT WHICH IS IRRADIATED AT FIRST INCIDENT ANGLE AND SECOND INCIDENT ANGLE TO IMAGE FORMING PRINT MEDIUM AND REFLECTED FROM IMAGE FORMING PRINT MEDIUM — 300

IDENTIFY KIND OF IMAGE FORMING PRINT MEDIUM USING VARIANCES OF FIRST RECEIVED LIGHT AMOUNTS AND SECOND RECEIVED LIGHT AMOUNTS — 302

END

# FIG. 8

300A

START

RECEIVE LIGHT IRRADIATED AT FIRST INCIDENT ANGLE FOR PREDETERMINED TIME — 400

RECEIVE LIGHT IRRADIATED AT SECOND INCIDENT ANGLE FOR PREDETERMINED TIME — 402

GO TO 302

## FIG. 9

300B

START

RECEIVE LIGHT IRRADIATED AT SECOND
INCIDENT ANGLE FOR PREDETERMINED TIME ── 500

RECEIVE LIGHT IRRADIATED AT FIRST
INCIDENT ANGLE FOR PREDETERMINED TIME ── 502

GO TO 302

## FIG. 10

300C

START

RECEIVE LIGHT IRRADIATED AT FIRST
INCIDENT ANGLE WHILE CARRIAGE MOVES
IN MAIN SCAN DIRECTION ── 600

RECEIVE LIGHT IRRADIATED AT SECOND
INCIDENT ANGLE WHILE CARRIAGE RETURNS ── 602

GO TO 302

# FIG. 11

300D

```
        ┌──────────┐
        │   START  │
        └──────────┘
             │
             ▼
┌─────────────────────────────────────┐
│  RECEIVE LIGHT IRRADIATED AT SECOND  │
│  INCIDENT ANGLE WHILE CARRIAGE MOVES │──── 700
│        IN MAIN SCAN DIRECTION        │
└─────────────────────────────────────┘
             │
             ▼
┌─────────────────────────────────────┐
│    RECEIVE LIGHT IRRADIATED AT FIRST │
│  INCIDENT ANGLE WHILE CARRIAGE RETURNS│──── 702
└─────────────────────────────────────┘
             │
             ▼
        ┌──────────┐
        │ GO TO 302│
        └──────────┘
```

# FIG. 12

302

START

CONVERT FIRST RECEIVED LIGHT AMOUNTS AND SECOND RECEIVED LIGHT AMOUNTS INTO DIGITAL SIGNALS — 800

AVERAGE EACH OF FIRST RECEIVED LIGHT AMOUNTS AND SECOND RECEIVED LIGHT AMOUNTS WHICH ARE CONVERTED INTO DIGITAL SIGNALS — 802

IDENTIFY IMAGE FORMING PRINT MEDIUM USING RATIO OF FIRST AVERAGE TO SECOND AVERAGE — 804

FILTER FIRST RECEIVED LIGHT AMOUNTS AND SECOND RECEIVED LIGHT AMOUNTS IN PREDETERMINED FREQUENCY RANGE — 806

DETECT FIRST VARIANCE AND SECOND VARIANCE — 808

IDENTIFY IMAGE FORMING PRINT MEDIUM USING FIRST VARIANCE AND SECOND VARIANCE — 810

END

**European Patent Office**

**EUROPEAN SEARCH REPORT**

Application Number

EP 06 11 0641

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 329 326 A (CANON KABUSHIKI KAISHA) 23 July 2003 (2003-07-23) * paragraphs [0035] - [0055], [0074], [0077] - [0081]; figures 1,2A,2B,3,4,10 * | 1-23 | INV. G01N21/57 B41J11/00 |
| X | EP 1 034 937 A (HEWLETT-PACKARD COMPANY; HEWLETT-PACKARD COMPANY, A DELAWARE CORPORATI) 13 September 2000 (2000-09-13) * paragraphs [0001], [0006] - [0015], [0022] - [0025], [0031] - [0041]; figures 1-4 * | 1-23 | |
| A | US 6 561 643 B1 (WALKER STEVEN H ET AL) 13 May 2003 (2003-05-13) * claim 1; figures 21,26 * | 8,9,20, 21 | |

TECHNICAL FIELDS SEARCHED (IPC)

G01N
B41J

The present search report has been drawn up for all claims

| Place of search | Date of completion of the search | Examiner |
|---|---|---|
| Munich | 8 June 2006 | Duijs, E |

**EP 1 698 884 A1**

## ANNEX TO THE EUROPEAN SEARCH REPORT
## ON EUROPEAN PATENT APPLICATION NO.

EP 06 11 0641

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2006

| Patent document cited in search report | | Publication date | Patent family member(s) | | Publication date |
|---|---|---|---|---|---|
| EP 1329326 | A | 23-07-2003 | JP | 3734247 B2 | 11-01-2006 |
| | | | JP | 2003212390 A | 30-07-2003 |
| | | | US | 2003137679 A1 | 24-07-2003 |
| EP 1034937 | A | 13-09-2000 | DE | 60022109 D1 | 29-09-2005 |
| | | | JP | 2000301805 A | 31-10-2000 |
| | | | US | 6291829 B1 | 18-09-2001 |
| US 6561643 | B1 | 13-05-2003 | NONE | | |

EPO FORM P0459

For more details about this annex : see Official Journal of the European Patent Office, No. 12/82